# FASCICULE DE BREVET EUROPEEN

(11) **EP 2 937 123 B1**
(45) Date de publication et mention de la délivrance du brevet: **24.08.2016**
(21) Numéro de dépôt: 15163807.9
(22) Date de dépôt: 16.04.2015
(51) Int. Cl.: A63H 27/133, B64C 39/02, H05K 7/14, A63H 27/00

(54) **PLATINE UNIVERSELLE DE MONTAGE POUR DRONE À VOILURE TOURNANTE**
UNIVERSAL-MONTAGEPLATINE FÜR DREHFLÜGEL-DROHNE
UNIVERSAL MOUNTING PLATE FOR ROTARY-WING DRONE

(30) Priorité: 24.04.2014 FR 1453712
(43) Date de publication de la demande: 28.10.2015
(73) Titulaire: Parrot Drones, 75010 Paris (FR)
(72) Inventeur: Caubel, Christine, 75010 Paris (FR); Morra, Flavien, 75010 Paris (FR)
(74) Mandataire: Dupuis-Latour, Dominique

(56) Documents cités:
- WO-A1-2011/058255
- WO-A2-2013/053476
- JP-U- H0 460 297
- US-A1- 2012 083 945

## Description

L'invention concerne les drones à voilure tournante, tels que les quadri-coptères.

Ces drones comprennent un corps de drone et une pluralité de blocs propulseurs avec chacun une hélice entrainée par un moteur individuel. Chaque bloc propulseur est monté à l'extrémité d'un bras respectif de liaison au corps du drone. Un exemple typique de tel drone est le *AR.Drone 2.0* de Parrot SA, Paris.

Le corps de drone comprend, à l'intérieur, un châssis solidaire des bras de liaison aux blocs propulseurs, ainsi qu'une carte électronique portant divers composants et des capteurs, notamment une centrale inertielle permettant de déterminer à tout moment l'attitude exacte du drone et sa position dans l'espace, pour commander de manière différenciée les différents moteurs afin de suivre les évolutions voulues par un utilisateur ou contrôlées par un pilote automatique.

Cette carte électronique est montée sur un support qui est relié au châssis du drone par une interface élastique comprenant un matériau de filtrage et d'absorption des vibrations mécaniques provoquées par les moteurs et les hélices, afin que ces vibrations ne viennent pas perturber le fonctionnement des capteurs et notamment de la centrale inertielle.

Le WO 2011/058255 A1 (Parrot) décrit plus précisément une telle structure support de carte électronique, où l'interface élastique se présente sous forme d'un anneau en mousse rapporté sur un épaulement correspondant du châssis du drone. La carte électronique de navigation est suspendue à la pièce de fixation par des pieds de liaison, sans contact mécanique direct avec une pièce vibrante du drone. Il est ainsi possible d'éliminer par l'interface mécanique absorbante les vibrations parasites générées par les groupes propulseurs en évitant que ceux-ci ne viennent perturber le fonctionnement des capteurs de navigation, et sans qu'il soit nécessaire de recourir à un filtrage passe-bas du signal recueilli par ces capteurs.

Récemment, les perfectionnements apportés à ces drones ont conduit à une augmentation de la complexité des circuits, et également de leur sensibilité aux différents parasites extérieurs, qu'il s'agisse de parasites mécaniques (vibrations, brusques changements d'assiette du drone, etc.) ou électriques (perturbations induites par les champs électromagnétiques environnants, notamment ceux produits par les moteurs en rotation).

Ces phénomènes parasites peuvent affecter non seulement le fonctionnement des circuits électroniques, mais également l'image prise par la caméra embarquée du drone, car les vibrations produisent des oscillations de faible amplitude et haute fréquence du drone et, par voie de conséquence, de l'axe de la caméra. Après balayage du capteur de la caméra, ces oscillations se traduisent sur l'image obtenue par un effet dit *wobble* où les lignes droites semblent brisées et forment des zigzags. Même si l'amplitude de cette déformation n'est pas très importante, elle est très visible et dégrade la qualité finale de l'image, surtout lorsque celle-ci est captée en haute résolution, typiquement en résolution HD (1920 x 1080 pixels).

Enfin, selon un autre aspect, l'utilisation de composants numériques exécutant des opérations de plus en plus complexes à une fréquence d'horloge élevée conduit à un échauffement important de ces composants, susceptible d'entrainer des dérives thermiques qui devront être détectées et compensées.

Enfin, les contraintes évidentes de légèreté, propres à tout aéronef, imposent de limiter les structures et équipements mécaniques au strict minimum du point de vue de leur masse, sans pour autant altérer leur rigidité et leur robustesse.

D'autres structures support sont décrites dans les US 2012/0083945 A1 et WO 2013/053475 A2, mais elles ne permettent pas de résoudre les problèmes exposés ci-dessus.

Le but de l'invention est de résoudre l'ensemble des difficultés évoquées plus haut, en proposant une nouvelle structure interne pour un corps de drone.

Plus précisément, l'invention s'applique à un drone à voilure tournante tel que celui divulgué par le WO 2011/058255 A1 précité, à savoir un drone comprenant, de manière en elle-même connue, un corps de drone et une pluralité de blocs propulseurs montés à l'extrémité de bras de liaison respectifs. Le corps de drone comprend : un châssis, solidaire des bras de liaison aux blocs propulseurs ; une carte électronique, portant des composants électroniques ainsi que des capteurs accélérométriques, inertiels et altimétriques ; un support de la carte électronique ; et une interface élastique entre le châssis et le support de carte, comprenant un matériau apte à filtrer et absorber des vibrations mécaniques issues des blocs propulseurs.

De façon caractéristique de l'invention, le corps de drone comprend une platine en matériau métallique électriquement conducteur, cette platine formant ledit support de carte électronique, la carte électronique étant fixée sur un côté recto de cette platine. La platine porte sur un côté verso des plages thermiquement conductrices en des emplacements situés en vis-à-vis d'au moins un composant électronique dissipateur de chaleur monté sur la carte électronique du côté verso, et elle est électriquement reliée à un potentiel de masse de la carte électronique de manière à former écran de blindage électromagnétique pour cette carte électronique. La platine est mécaniquement reliée au châssis avec découplage par ladite interface élastique interposée entre la platine et le châssis.

Selon diverses caractéristiques subsidiaires avantageuses :
- le matériau métallique électriquement conducteur de la platine comprend le magnésium et ses alliages ;
- l'interface élastique comprend une pluralité d'entretoises support intercalées entre la platine et le châssis, chaque entretoise comprenant un plot en matériau élastomère avec une première extrémité reliée à la platine et une seconde extrémité, opposée, reliée au châssis ;
- la platine est une plaque monobloc continue, à l'exception d'orifices pour le passage de fils de liaison et/ou de signaux de capteur de la carte électronique ;
- la platine comprend en outre des rebords longitudinaux formant blindage latéral à l'égard de composants électroniques montés du côté verso de la carte électronique ;
- la platine comprend côté verso une cavité d'accès à des connecteurs de liaison à un circuit électronique auxiliaire, notamment un circuit comprenant au moins un composant d'antenne radiofréquence ;
- le drone comprend en outre une caméra video, mécaniquement solidaire de la carte électronique ;
- le au moins un composant électronique dissipateur de chaleur monté du côté verso de la carte électronique est l'un d'entre : un microcontrôleur, un composant de mémoire, une caméra video ;
- le corps de drone supporte une batterie amovible rechargeable d'alimentation du drone, et la platine comprend en outre au moins une boucle de passage d'une bride de fixation de cette batterie amovible.

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue en perspective éclatée d'un drone selon l'invention montrant, dissociés, les différents éléments internes du corps du drone.
La Figure 2 est une représentation en perspective vue de dessus de la platine métallique spécifique mise en oeuvre par l'invention.
La Figure 3 représente cette même platine, en perspective vue de dessous.
La Figure 4 est une coupe longitudinale de la platine des Figures 2 et 3, avec la carte électronique et ses composants montés dessus.

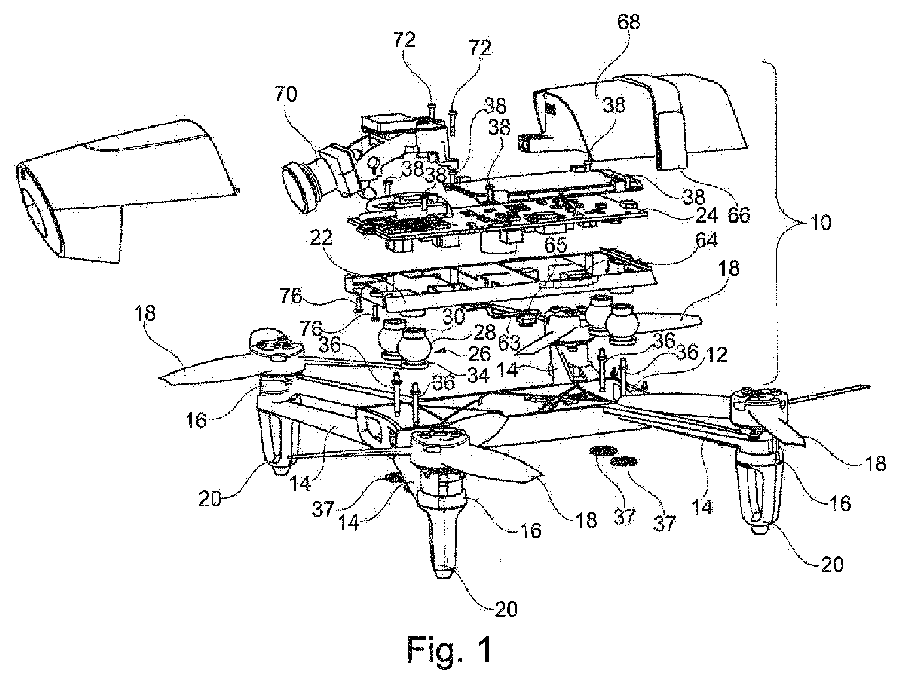

Sur la Figure 1, on a représenté un drone de type quadricoptère, avec un corps de drone 10 comprenant en partie inférieure un châssis 12 solidaire de quatre bras de liaison monobloc 14 rayonnant à partir du châssis. Chaque bras est équipé à son extrémité distale d'un bloc propulseur 16 comprenant un moteur entrainant en rotation une hélice 18 s'étendant dans un plan approximativement horizontal au-dessus du bras 14. En partie inférieure, le bloc propulseur 16 est prolongé par un étrier formant pied 20 sur lequel pourra reposer au sol le drone à l'arrêt.

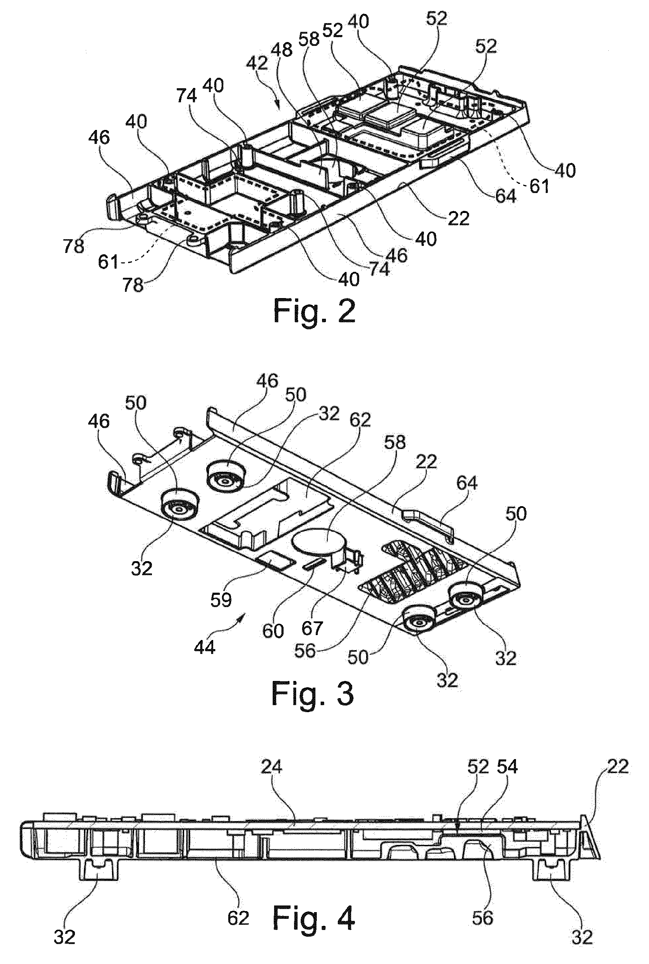

Le corps de drone comprend un support 22 destiné à recevoir la carte électronique principale 24 du drone. Ce support 22 se présente sous forme d'une platine, qui sera décrite plus en détail en référence aux Figures 2 à 4.

La platine 22 n'est pas solidarisée au châssis, mais est reliée à celui-ci par l'intermédiaire d'une interface élastique constituée d'une pluralité d'entretoises support 26 intercalées entre le châssis 12 et la platine 22. Chaque entretoise 26 comprend un plot 28 en matériau élastomère, avec une extrémité supérieure 30 reliée par une liaison non rigide à la platine 22, par exemple par extension d'un épaulement en partie supérieure du plot élastomère dans un évidement correspondant 32 (Figures 3 et 4) formé en partie inférieure de la platine 22. À son extrémité opposée, inférieure, le plot 28 est muni d'un épaulement 34 s'insérant dans le châssis 12. La liaison entre le châssis 12 et le plot 28 est par exemple réalisée par l'intermédiaire d'un goujon 36, vissé en partie supérieure à la platine au centre du bloc 50, passant librement à travers le plot et comportant, en partie inférieure, une tige filetée passant au travers du châssis et à laquelle se vissera en dessous de ce châssis une pièce taraudée large 37 comparable à un écrou. Ce système tige/écrou large ne doit en aucun cas être lié au châssis 12 sous peine de retransmettre les vibrations à la platine, et il a en outre une fonction anti-arrachement des interfaces 26 en matériau élastomère.

On va maintenant décrire plus en détail la configuration de la platine support 22. Cette platine reçoit, comme on l'a indiqué plus haut, la carte électronique 24, qui est solidarisée à la platine 22 au moyen de vis telles que 38 (Figure 1) reçues dans des logements taraudés 40 (Figure 2) débouchant en partie supérieure de la platine.

Sur les Figures 2 et 3 on a respectivement illustré les faces supérieure 42 et inférieure 44 de la platine 22.

Cette platine 22 est un élément monobloc en matériau métallique léger, par exemple en magnésium ou alliage de magnésium choisi pour sa légèreté et sa robustesse mécanique. Elle se présente sous forme d'une plaque pourvue de deux rebords latéraux longitudinaux 46 et de diverses nervures internes telles que 48.

De façon caractéristique, la plaque métallique constituant la platine 22 comporte en partie supérieure des surfaces planes telles que 52 (Figure 2) aptes à venir en contact avec des composants tels que 54 (Figure 4) montés sur la face intérieure de la carte électronique 24. Ces surfaces 52 feront fonction d'éléments de transmission de la chaleur, pour évacuer les calories excédentaires, générées par les composants en contact avec ces surfaces, vers des ailettes de refroidissement telles que 56 formées en partie inférieure de la platine 22 (Figures 3 et 4) en vis-à-vis des surfaces de contact 52 formées en partie supérieure. On évitera ainsi un échauffement excessif des composants les plus susceptibles de chauffer, tels que microcontrôleur, composants mémoire ou même caméra video le cas échéant.

La plaque constituant la platine 22 est réalisée sous forme d'un élément monobloc continu ininterrompu, à la seule exception d'ouvertures de petite dimension telles que 58, 59 ou 60. La fenêtre 58 sert de fenêtre pour un capteur altimétrique à ultrasons monté sur la face inférieure de la carte électronique 24, et la fenêtre 59 sert de fenêtre pour le transformateur de ce même capteur, monté sur la face inférieure de la carte électronique pour gagner en épaisseur. La fenêtre 60 permet de faire passer un câble plat 63 (Figure 1) de liaison à une caméra à visée verticale 65, située sous la platine 22 et dont le corps repose sur le podium 67 (Figure 3) formé sur la face inférieure de la platine 22.

La plaque formant la platine 22, une fois reliée à la masse du circuit électronique de la carte 24, va faire fonction d'écran de blindage électromagnétique pour cette carte électronique à l'encontre des rayonnements parasites environnants, notamment ceux générés par les moteurs des blocs propulseurs 16, dont seront protégés, du fait de la présence des bords latéraux longitudinaux 46, les composants les plus sensibles montés sur la face inférieure de la carte électronique 24. Les zones où sont implantés ces composants sensibles sur la carte électronique (à l'avant du drone pour la partie de puissance et à l'arrière pour la partie logique) par rapport à la platine 22 ont été schématisées en 61. Aucune des parois latérales, frontales ou arrière dans ces zones ne comporte d'ouverture.

Sur sa face inférieure, la platine 22 est pourvue d'une large fenêtre telle que 62 pour permettre le passage de câbles de liaison de la carte électronique 24 aux moteurs des blocs propulseurs 16, ainsi que de câbles de liaison vers une carte électronique auxiliaire, notamment une carte portant un ou plusieurs composants d'antenne WiFi, qui ne seront pas affectés par l'effet de blindage électromagnétique. En somme, cette large fenêtre 62 sera positionnée au-dessus de connecteurs prenant place sur la face inférieure de la carte électronique 24 pour pouvoir lier différents composants ne nécessitant pas le blindage de la platine (caméra verticale, câbles coaxiaux vers des cartes antennes, connecteurs vers d'autres cartes annexes, câbles moteurs...).

Enfin, la platine 22 peut être pourvue sur l'une de ses faces latérales 46 d'une boucle ou oeillet 64 destiné à recevoir une bride 66 (Figure 1) de fermeture d'une batterie amovible rechargeable 68 d'alimentation du drone.

En ce qui concerne le bloc portant la caméra 70 embarquée par le drone (Figure 1), celui-ci est solidarisé à la platine 22, par exemple au moyen de vis 72 introduites dans des trous taraudés 74 de la platine (Figure 2), et de vis 76 introduites dans des orifices 78. De cette manière, la caméra 70 est mécaniquement découplée du châssis 12 grâce aux entretoises élastiques intermédiaires 26, ce qui permet d'éliminer la quasi-totalité des vibrations générées par les moteurs, et donc l'effet *wobble* évoqué plus haut.

Il faut également souligner que le support que l'on vient de décrire joue vis-à-vis de la carte électronique 24, et de tous les éléments solidaires de la platine 22, le rôle d'amortisseur de chocs à l'atterrissage du drone, en évitant notamment d'user ou d'endommager les composants, connecteurs, etc. disposés sur la carte électronique 24, ainsi que la caméra 70.

## Revendications

1. Un drone à voilure tournante, comprenant un corps de drone (10) et une pluralité de blocs propulseurs (16) montés à l'extrémité de bras de liaison (14) respectifs, le corps de drone (10) comprenant :
- un châssis (12), solidaire des bras de liaison aux blocs propulseurs ;
- une carte électronique (24), portant des composants électroniques ainsi que des capteurs accélérométriques, inertiels et altimétriques ;
- un support de la carte électronique ; et
- une interface élastique (26) entre le châssis et le support de carte, comprenant un matériau apte à filtrer et absorber des vibrations mécaniques issues des blocs propulseurs,
**caractérisé en ce que** :
- le corps de drone comprend une platine (22) en matériau métallique électriquement conducteur, cette platine formant ledit support de carte électronique, la carte électronique (24) étant fixée sur un côté recto de cette platine ;
- la platine porte sur un côté verso des plages thermiquement conductrices (52) en des emplacements situés en vis-à-vis d'au moins un composant électronique dissipateur de chaleur (54) monté sur la carte électronique du côté verso ;
- la platine est électriquement reliée à un potentiel de masse de la carte électronique de manière à former écran de blindage électromagnétique pour cette carte électronique ; et
- la platine est mécaniquement reliée au châssis avec découplage par ladite interface élastique (26) interposée entre la platine et le châssis.

2. Le drone de la revendication 1, dans lequel le matériau métallique électriquement conducteur de la platine comprend le magnésium et ses alliages.

3. Le drone de la revendication 1, dans lequel l'interface élastique comprend une pluralité d'entretoises support (26) intercalées entre la platine et le châssis, chaque entretoise comprenant un plot (28) en matériau élastomère avec une première extrémité (30) reliée à la platine et une seconde extrémité (34), opposée, reliée au châssis.

4. Le drone de la revendication 1, dans lequel la platine (22) est une plaque monobloc continue, à l'exception d'orifices (58, 59, 60) pour le passage de fils de liaison et/ou de signaux de capteur de la carte électronique.

5. Le drone de la revendication 4, dans lequel la platine (22) comprend en outre des rebords longitudinaux (22) formant blindage latéral à l'égard de composants électroniques montés du côté verso de la carte électronique.

6. Le drone de la revendication 1, dans lequel la platine comprend côté verso une cavité (62) d'accès à des connecteurs de liaison à un circuit électronique auxiliaire.

7. Le drone de la revendication 6, dans lequel le circuit électronique auxiliaire comprend au moins un composant d'antenne radiofréquence.

8. Le drone de la revendication 1, comprenant en outre une caméra video (70), mécaniquement solidaire de la carte électronique.

9. Le drone de la revendication 1, dans lequel le au moins un composant électronique dissipateur de chaleur (54) monté du côté verso de la carte électronique est l'un d'entre : un microcontrôleur, un composant de mémoire, une caméra video.

10. Le drone de la revendication 1, dans lequel le corps de drone supporte une batterie amovible rechargeable (68) d'alimentation du drone, et la platine comprend en outre au moins une boucle (64) de passage d'une bride de fixation (66) de cette batterie amovible.

## Patentansprüche

1. Drehflügel-Drohne, die einen Drohnenkörper (10) und mehrere Antriebsblöcke (16), die am Ende entsprechender Verbindungsarme (14) montiert sind, umfasst, wobei der Drohnenkörper (10) Folgendes umfasst:
- einen Rahmen (12), der mit den Verbindungsarmen mit den Antriebsblöcken fest verbunden ist;
- eine elektronische Karte (24), die elektronische Komponenten sowie Trägheits- und Höhenmess-Beschleunigungssensoren trägt;
- einen Träger der elektronischen Karte; und
- eine elastische Grenzfläche (26) zwischen dem Rahmen und dem Kartenträger, die ein Material enthält, das mechanische Schwingungen, die von den Antriebsblöcken ausgehen, filtern und absorbieren kann,
**dadurch gekennzeichnet, dass**:
- der Drohnenkörper eine Platine (22) aus elektrisch leitendem metallischem Material enthält, wobei diese Platine den Träger der elektronischen Karte bildet, wobei die elektronische Karte (24) an einer Vorderseite dieser Platine befestigt ist;
- die Platine auf ihrer Rückseite wärmeleitende Bereiche (52) an Stellen trägt, die sich gegenüber wenigstens einer wärmeabstrahlenden elektronischen Komponente (54), die auf der elektronischen Karte auf der Rückseite montiert ist, befinden;
- die Platine mit einem Massepotential der elektronischen Karte elektrisch verbunden ist, derart, dass für diese elektronische Karte eine elektromagnetische Abschirmung gebildet wird; und
- die Platine mit dem Rahmen mit Entkopplung durch die elastische Grenzfläche (26), die zwischen die Platine und den Rahmen eingefügt ist, verbunden ist.

2. Drohne nach Anspruch 1, wobei das elektrisch leitende metallische Material der Platine Magnesium und seine Legierungen enthält.

3. Drohne nach Anspruch 1, wobei die elastische Grenzfläche mehrere Tragabstandshalter (26) umfasst, die zwischen die Platine und den Rahmen eingefügt sind, wobei jeder Abstandshalter ein Kontaktstück (28) aus elastomerem Material enthält, wovon ein erstes Ende (30) mit der Platine verbunden ist und ein zweites gegenüberliegendes Ende (34) mit dem Rahmen verbunden ist.

4. Drohne nach Anspruch 1, wobei die Platine (22) eine Monoblockplatine ist, die mit Ausnahme von Öffnungen (58, 59, 60) für den Durchgang von Verbindungsdrähten und/oder Sensorsignalen der elektronischen Karte ununterbrochen ist.

5. Drohne nach Anspruch 4, wobei die Platine (22) außerdem Längsränder (22) aufweist, die eine seitliche Abschirmung gegenüber den elektronischen Komponenten, die auf der Rückseite der elektronischen Karte montiert sind, bilden.

6. Drohne nach Anspruch 1, wobei die Platine auf der Rückseite einen Hohlraum (62) für den Zugang zu den Verbindern mit einer elektronischen Hilfsschaltung umfasst.

7. Drohne nach Anspruch 6, wobei die elektronische Hilfsschaltung wenigstens eine Hochfrequenz-Antennenkomponente umfasst.

8. Drohne nach Anspruch 1, die außerdem eine Videokamera (70) umfasst, die mit der elektronischen Karte mechanisch fest verbunden ist.

9. Drohne nach Anspruch 1, wobei die wenigstens eine wärmeabstrahlende elektronische Komponente (54), die an der Rückseite der elektronischen Karte montiert ist, eine der Folgenden ist: Mikrocontroller, Speicherkomponente, Videokamera.

10. Drohne nach Anspruch 1, wobei der Drohnenkörper eine wiederaufladbare entnehmbare Batterie (68) für die Versorgung der Drohne enthält und die Platine außerdem eine Schleife (64) für den Durchgang eines Befestigungsflansches (66) dieser entnehmbaren Batterie umfasst.

## Claims

1. A rotary-wing drone, comprising a drone body (10) and a plurality of propulsions units (16) mounted at the end of respective connection arms (14), the drone body (10) comprising:
- a frame (12), integral with the arms for the connection to the propulsion units;
- an electronic board (24), carrying electronic components as well as accelerometer, inertial and altimeter sensors;
- an electronic board support; and
- an elastic interface (26) between the frame and the board support, comprising a material adapted to filter and absorb mechanical vibrations coming from the propulsion units,
**characterized in that**:
- the drone body comprises a platen (22) made of an electrically conductive metal material, this platen forming said electronic board support, the electronic board (24) being fastened to a recto side of this platen;
- the platen carries, on a verso side, thermally conductive areas (52) in places located opposite to at least one heat-dissipation electronic component (54) mounted on the electronic board on the verso side;
- the platen is electrically connected to a ground potential of the electronic board so as to form an electromagnetic shielding screen for this electronic board; and
- the platen is mechanically connected to the frame with decoupling by said elastic interface (36) interposed between the platen and the frame.

2. The drone of claim 1, wherein the electrically conductive metal material of the platen comprises the magnesium and the alloys thereof.

3. The drone of claim 1, wherein the elastic interface comprises a plurality of support spacers (26) interposed between the platen and the frame, each spacer comprising a stud (28) made of an elastomeric material with a first end (30) connected to the platen and a second, opposite end (34), connected to the frame.

4. The drone of claim 1, wherein the platen (22) is a continuous, single-piece plate, with the exception of holes (58, 59, 60) for the passage of connexion wires and/or of sensor signals of the electronic board.

5. The drone of claim 4, wherein the platen (22) further comprises longitudinal edges (22) forming a lateral shielding relative to electronic compounds mounted on the verso side of the electronic board.

6. The drone of claim 1, wherein the platen comprises, on the verso side, a cavity (62) for access to connectors for the connexion to an auxiliary electronic circuit.

7. The drone of claim 6, wherein the auxiliary electronic circuit comprises at least one radiofrequency antenna component.

8. The drone of claim 1, further comprising a video camera (70), mechanically integral with the electronic board.

9. The drone of claim 1, wherein the at least one heat-dissipation electronic component (54) mounted on the verso side of the electronic board is one among: a microprocessor, a memory component, a video camera.

10. The drone of claim 1, wherein the drone body supports a removable, rechargeable battery (68) for the power supply of the drone, and the platen further comprises at least one loop (64) for the passage of a clamp (66) for fastening this removable battery.
